(19) Europäisches Patentamt
European Patent Office
Office européen des brevets

(11) EP 2 472 255 B1

(12) **EUROPEAN PATENT SPECIFICATION**

(45) Date of publication and mention of the grant of the patent:
**25.05.2016 Bulletin 2016/21**

(21) Application number: **10811768.0**

(22) Date of filing: **20.08.2010**

(51) Int Cl.:
***G01N 30/88*** (2006.01)
***B01J 20/281*** (2006.01)
***C07B 57/00*** (2006.01)
***C08G 61/02*** (2006.01)
***B01J 20/286*** (2006.01)
***B01J 20/29*** (2006.01)

(86) International application number:
**PCT/JP2010/064074**

(87) International publication number:
**WO 2011/024718 (03.03.2011 Gazette 2011/09)**

(54) **SEPARATING AGENT FOR OPTICAL ISOMER**

TRENNMITTEL FÜR EIN OPTISCHES ISOMER

AGENT DE SÉPARATION POUR UN ISOMÈRE OPTIQUE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **26.08.2009 JP 2009195248**

(43) Date of publication of application:
**04.07.2012 Bulletin 2012/27**

(73) Proprietors:
- **Daicel Corporation**
  **Osaka-shi, Osaka 530-0011 (JP)**
- **National University Corporation Nagoya University**
  **Aichi 464-8601 (JP)**

(72) Inventors:
- **YASHIMA, Eiji**
  **Aichi 464-8601 (JP)**
- **TAMURA, Kazumi**
  **Hyogo 671-1281 (JP)**
- **MIYABE, Toshitaka**
  **Aichi 464-8601 (JP)**

(74) Representative: **Grünecker Patent- und Rechtsanwälte**
**PartG mbB**
**Leopoldstraße 4**
**80802 München (DE)**

(56) References cited:
**WO-A1-2007/063994 WO-A1-2007/063994**
**WO-A1-2008/136512**

- **KAZUMI TAMURA ET AL: "Separation of enantiomers on diastereomeric right- and left-handed helical poly(phenyl isocyanide)s bearing l-alanine pendants immobilized on silica gel by HPLC", POLYMER CHEMISTRY, vol. 2, no. 1, 23 August 2010 (2010-08-23) , page 91, XP055083179, ISSN: 1759-9954, DOI: 10.1039/c0py00164c**
- **CHUICHI HIRAYAMA ET AL: "Passage KUROMATO-YO JUSHI", 20 October 1989 (1989-10-20), KUROMATO-YO JUSHI, KYORITSU SHUPPAN, JP, PAGE(S) 78 - 83, XP008152486, ISBN: 978-4-320-04245-2 * the whole document ***
- **ZONG-QUAN WU ET AL: "Enantiomer-Selective and Helix-Sense-Selective Living Block Copolymerization of Isocyanide Enantiomers Initiated by Single-Handed Helical Poly(phenyl isocyanide)s", JOURNAL OF THE AMERICAN CHEMICAL SOCIETY, vol. 131, no. 19, 20 May 2009 (2009-05-20) , pages 6708-6718, XP055083183, ISSN: 0002-7863, DOI: 10.1021/ja900036n**
- **CHUICHI HIRAYAMA ET AL. KUROMATO-YO JUSHI 20 October 1989, pages 79 - 82, XP008152486**
- **'IUPAC compendium of Chemical Terminology 2014',**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a separating agent for optical isomers comprising a polymer having a helical structure.

### Background Art

Optical isomers are used as drugs or as raw materials therefor. In such applications where the optical isomers are caused to act on living organisms, only one of the optical isomers is typically used and an extremely high optical purity is requested. Known as a method of producing an optical isomer that requires such high optical purity is a method involving separating one optical isomer from a mixture of optical isomers like a racemic body with a column storing a separating agent for optical isomers having an optical resolving power in chromatography such as liquid chromatography, simulated moving bed chromatography, or supercritical fluid chromatography (see, for example, Patent Literature 1).

A polymer having an optically active moiety can be used as the separating agent for optical isomers. Such separating agent for optical isomers is typically constructed of a carrier such as silica gel and the polymer which the surface of the carrier is caused to carry, and is filled in a column tube before being used in optical resolution.

Meanwhile, various polymers have been known as such polymers having optically active moiety. For example, a poly (aromatic isocyanide) derivative having a main chain structure formed of a right-handed or left-handed helical structure formed of a single monomer, the derivative being obtained by subjecting to living polymerization for an aromatic isonitrile having an amide group in which an optically active amino acid or a derivative thereof is amino-bonded to an aromatic ring, has been known as any such polymer (see, for example, Patent Literature 2 and Non Patent Literature 1). However, no separating agent for optical isomers formed of the poly (aromatic isocyanide) derivative has been known.

### Citation List

### Patent Literature

[PTL 1] WO 02/030853 A1
[PTL 2] WO 07/063994 A1

### Non Patent Literature

[NPL 1] J. Am. Chem. Soc., 131, 6709 (2009)
[NPL 2] KUROMATO-YO JUSHI, KYORITSU SHUPPAN, JP, pp. 78 - 83 (1989)

NPL 2 discloses methods for producing fillers containing an optically active polymer chemically bonded to a support. The filler is either obtained by polymerizing monomers on the surface of a silica gel support treated with a silane coupling agent having a vinyl group, or by chemically bonding a polymer to a silica gel support through an epoxy group.

### Summary of Invention

### Technical Problem

The problem of the present invention is to provide a separating agent having excellent solvent resistance and good capability of separating optical isomers.

### Solution to Problem

The problem of the present invention is solved by a separating agent for optical isomers, which is formed of a helical polymer having a structure represented by the following formula (2) and a carrier

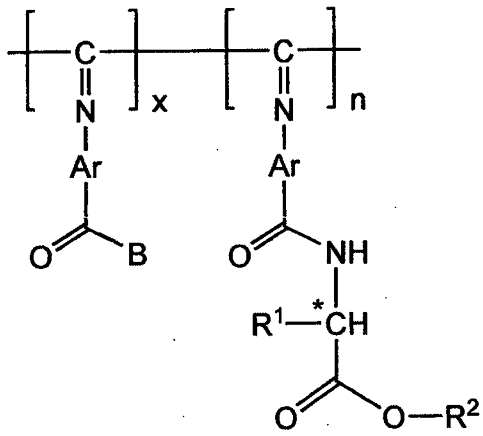

(2)

wherein in the formula (2), Ar's each independently represent an aromatic group or a heteroaromatic group, $R^1$'s each independently represent an organic group having 1 to 10 carbon atoms which may have a heteroatom and may contain an aromatic ring, $R^2$'s each independently represent a hydrocarbon group having 1 to 20 carbon atoms, and n represents an integer of 10 or more, B's each independently represent a group bonded to the surface of the carrier and x represents an integer of 1 to 5, and wherein the carrier is a surface-treated silica.

Preferred embodiments of the present invention are set forth in the dependent claims.

Description of Embodiments

In the formula **(2),** Ar's each independently represent an aromatic group or a heteroaromatic group, $R^1$'s each independently represent an organic group having 1 to 10 carbon atoms which may have a heteroatom and may contain an aromatic ring, $R^2$'s each independently represent a hydrocarbon group having 1 to 20 carbon atoms, and n represents an integer of **10** or more.

The helical polymer has only to be one of a left-handed polymer and a right-handed polymer. As optical resolution with the separating agent for optical isomers of the present invention is based on an interaction between the helical polymer and a target product of the optical resolution, the optical resolving power of the separating agent for optical isomers of the present invention varies depending on the target product. To make the helical polymer whose helical sense is one of a left-handed direction and a right-handed direction is expected to result in the expression or improvement of an optical resolving power for a specific target product.

The Ar's each represent an aromatic group or a heteroaromatic group. The aromatic group may contain a heteroatom such as oxygen, nitrogen, or sulfur, or a halogen atom. The heteroaromatic group refers to an aromatic group obtained by substituting part of the carbon atoms that construct an aromatic ring in the aromatic group with a heteroatom. A plurality of kinds of aromatic groups may be incorporated, or one kind of aromatic group may be incorporated. The aromatic group has preferably 5 to 14 carbon atoms, more preferably 6 to 10 carbon atoms from the viewpoint of ease of handling upon production of the helical polymer. Examples of such aromatic group include divalent aromatic groups each having another bonding site at an arbitrary position of any one of the following monovalent groups typified by a phenylene group. The number of kinds of aromatic groups is preferably one from the viewpoint of the above-mentioned ease of handling and from such a viewpoint that the expression or improvement of an optical resolving power for a specific target product is expected. Any such Ar specifically represents, for example, a phenylene group.

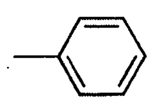
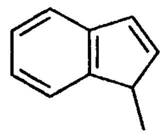
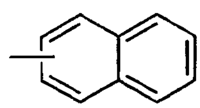

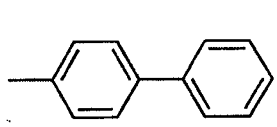
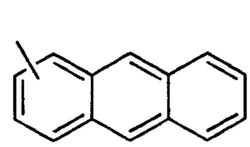

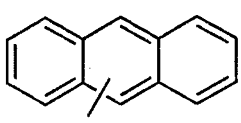
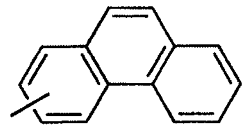

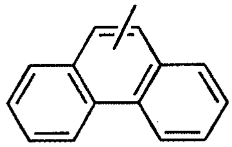
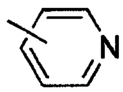
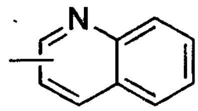

Each of the $R^1$'s has only to represent amonovalent organic group using a carbon atom between an amide group and a carbonyl group in an amino acid residue in the formula (2) as asymmetric carbon, and one kind of monovalent organic group may be incorporated, or a plurality of kinds of monovalent organic groups may be incorporated. The $R^1$'s preferably represent one kind of group from such a viewpoint that the expression or improvement of an optical resolving power for a specific target product is expected. The $R^1$'s each represent, for example, a group at a side chain of a natural amino acid except glycine.

The $R^2$'s each represent a hydrocarbon group having 1 to 20 carbon atoms, and one kind of hydrocarbon group may be incorporated, or a plurality of kinds of hydrocarbon groups may be incorporated. The structures of the hydrocarbon groups are not particularly limited, and may each be a chain-like structure, i.e., a linear or branched structure, may each be a cyclic structure such as an aliphatic ring or an aromatic ring, or may include both of these structures. Further, the hydrocarbon groups represented by the $R^2$'s may each contain a heteroatom such as oxygen, nitrogen, or sulfur, or a halogen atom. The $R^2$'s preferably represent one kind of group, and the group is preferably a linear alkyl group having 1 to 20 carbon atoms from the viewpoint of ease of handling upon production of the helical polymer and from such a viewpoint that the expression or improvement of an optical resolving power for a specific target product is expected. Any such $R^2$ specifically represents, for example, an n-decyl group.

The n has only to represent 10 or more, is preferably as large as possible from the viewpoint of the expression or improvement of an optical resolving power, and preferably has a certain upper limit from the viewpoint of ease of handling in the production of the helical polymer or the production of the separating agent for optical isomers. The n represents preferably 10 to 300, more preferably 50 to 200 from those viewpoints.

Each of the number-average molecular weight (Mn) and weight-average molecular weight (Mw) of the helical polymer is preferably as large as possible from the viewpoint of the expression or improvement of an optical resolving power, and preferably has a certain upper limit from the viewpoint of the solubility of the helical polymer in a solvent. The molecular weights are each preferably 20,000 to 1,000,000 from those viewpoints. Themolecular weight distribution (Mw/Mn) of the helical polymer is not particularly limited as long as the helical sense of the helical polymer is uniform.

The Mn, Mw, and Mw/Mn of the helical polymer can be determined by size exclusion chromatography (SEC). In addition, the n can be determined by specifying a constitutional unit of the helical polymer with ordinary structural analysis means such as NMR or IR in addition to SEC.

The Mn and Mw of the helical polymer can be adjusted depending on a molar ratio between a complex (initiator) to be used as a catalyst in living polymerization to be described later and a monomer. The Mw/Mn of the helical polymer can be narrowed as compared with that in the case where the helical polymer is produced through the use of the initiator by a method except the living polymerization.

The helical polymer contains optically active amino acid residues each including the $R^1$. Each of the amino acid residues has only to be a residue of an optically active amino acid. The amino acid residues may include residues of both an L-type amino acid and a D-type amino acid, may be formed only of a residue of an L-type amino acid, or may be formed only of a residue of a D-type amino acid. When the amino acid residues are formed of a residue of one of the L- and D-type, optically active amino acids, the expression or improvement of an optical resolving power for a specific target product is expected.

Inaddition, the amino acid residues may include residues of a plurality of optically active amino acids, or may be a residue of a single optically active amino acid. When the amino acid residues are formed of a residue of a single optically active amino acid, the expression of an optical resolving power for a specific target product or an additional improvement thereof is expected.

In particular, when the helical polymer is a helical polymer with a specific helical sense having the amino acid residues each having specific optical activity, the expression of an optical resolving power for a specific target product or an additional improvement thereof is expected. Further, when the helical polymer is a helical polymer with a specific helical sense having a single amino acid residue having specific optical activity, the expression of an optical resolving power for a specific target product or a further additional improvement thereof is expected.

The helical polymer from which the expression or improvement of such optical resolving power is expected is, for example, a left-handed helical polymer in which the Ar represents a phenylene group, the $R^1$ represents a methyl group that turns an amino acid residue in the formula (2) into a residue of L-alanine, and the $R^2$ represents an n-decyl group.

As described in Patent Literature 2 described in the foregoing, the helical polymer can be obtained by the living polymerization of an aromatic isonitrile constructed of predetermined Ar, $R^1$, and $R^2$. The living polymerization can be suitably performed in the presence of a polymerization solvent by using, as a catalyst having a living polymerization characteristic for the aromatic isonitrile, an acetylene-crosslinked, dinuclear platinum-palladium-μ-ethynediyl complex represented by the following formula (3). The helical sense of the helical polymer can be controlled depending on the polarity of the polymerization solvent in the living polymerization, and a left-handed helical polymer and a right-handed helical polymer in products can be separated from each other by utilizing a difference between their solubilities in an organic solvent.

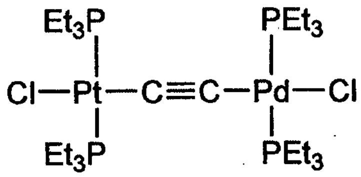

(3)

The helical sense of the helical polymer can be determined from the sign of a CD spectrum. That is, when a peak appearing in a CD spectrum around 300 to 400 nm as the main chain absorption band of the helical polymer is positive, the helical polymer is found to be a right-handed helical polymer, and when the peak appearing in the CD spectrum around 300 to 400 nm is negative, the helical polymer is found to be a left-handed helical polymer.

The carrier carries the helical polymer. A carrier filled in a column tube can be used as the carrier.

The carrier is preferably porous from the viewpoint of the improvement of an optical resolving power for a target product. The carrier, which may be particulate or may be an integral carrier to be integrally filled in the column tube, is preferably particulate from the viewpoints of the production of the separating agent for optical isomers and ease of handling at the time of the production. The carrier is a surface-treated silica.

The carrier carries (fixes) the helical polymer

The surface treatment of the carrier can be appropriately performed by a known technology and a surface treatment agent is, for example, an organosilicon compound having an amino group or a glycidyl group.

The bonding portion in the helical polymer is, for example, a functional group that is bonded to a bonding group in the surface of the surface-treated carrier by a reaction such as dehydration condensation or a constitutional unit having the group.

In the formula (2), B's each independently represent a group bonded to the surface of the carrier, and x represents an integer of 1 to 5.

Each of the B's has only to represent a group bonded to the bonding group in the carrier, and a plurality of kinds of groups may be incorporated, or one kind of group may be incorporated. The B's preferably represent one kind of group from the viewpoint of the ease with which the chemical bond with the carrier is controlled.

Examples of the groups represented by the B's include an oxy group as a residue of a hydroxyl group and an imino group as a residue of an amino group.

A structural unit having the B in the formula (2) can be introduced to the helical polymer by subsequently subjecting a monomer (aromatic isonitrile) serving as the structural unit to living polymerization after the living polymerization of the aromatic isonitrile serving as the structural unit represented by the formula (1).

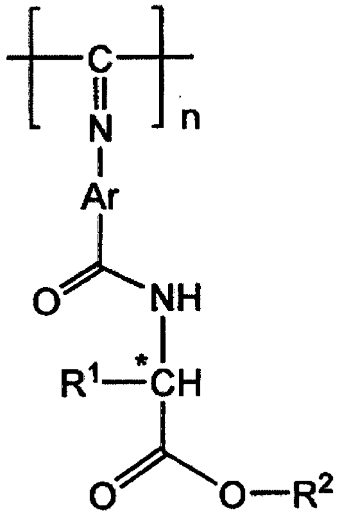

(1)

wherein all symbols have the same meanings as described above.

The monomer serving as the structural unit having the B in the formula (2) may be such that a precursor for the B is protected with a protective group as required. The helical polymer and the carrier can be chemically bonded to each other by causing the precursor for the B and the bonding group to react with each other after deprotection as required.

The separating agent for optical isomers of the present invention can be suitably used in the separation of optical isomers each having a specific structure because the helical polymer has a side chain represented by the formula (2) . For example, when the Ar represents phenylene, an amino acid residue including the $R^1$ is a residue of L-alanine, and the $R^2$ represents an n-decyl group, the separating agent for optical isomers of the present invention is advantageous for the optical resolution of an optical isomer having a carbonyl group or an amide group, an optical isomer free of any condensed ring and having a single ring structure, and an optical isomer having both of these features.

The optical isomer having a carbonyl group or an amide group preferably has two or more carbonyl groups or amide groups. In addition, carbon adjacent to a carbonyl group or an amide group is preferably asymmetric carbon.

The ring structure of the optical isomer having a single ring structure may be a monocyclic aromatic ring such as phenyl, or may be a mono alicyclic ring. In addition, the number of single ring structures is one or two or more, and the aliphatic ring has preferably 3 or more carbon atoms, more preferably 4 to 6 carbon atoms.

It should be noted that the expression of optical resolving powers for optical isomers of various structures is expected by, for example, the introduction of a condensed ring structure to the Ar or $R^2$, the introduction of a specific substituent to the $R^2$, the introduction of a specific functional group that constructs an acidic or basic amino acid residue to the $R^1$, or the introduction of a hydroxyl group into any such group for improving in hydrophilicity.

In addition, the separating agent for optical isomers of the present invention can be used in optical resolution or the production of optical isomers by the optical resolution by being used as a filler in any one of various types of chromatography such as HPLC, simulated moving bed chromatography, and supercritical fluid chromatography. Liquids such as various organic solvents and a mixed solvent thereof, and a mixed solvent of an organic solvent and water can each be used as a moving phase in such optical resolution. In particular, a solvent having high solubility such as THF can be used as a moving phase, and the expression of optical resolving powers for optical isomers of various structures is similarly expected depending on the kind and composition of the moving phase.

Examples

Examples of the present invention are described below.

It should be noted that in each of the following examples, an NMR spectrum was measured with a Varian VXR-500S spectrometer (manufactured by Varian) operated at 500 MHz and with tetramethylsilane (TMS) as an internal standard substance.

An IR spectrum was measured with a JASCO FT/IR-680 spectrophotometer (manufactured by JASCO Corporation).

An absorption spectrum and a circular dichroism (CD) spectrum were measured with a quartz cell having an optical path length of 1.0 mm at 25°C and with a JASCO V570 spectrophotometer and a JASCO J820 spectropolarimeter, respectively. The concentration of a polymer was calculated on the basis of a monomer unit and set to 0.2 mg/mL.

An optical rotation was measured with a quartz cell having an optical path length of 2.0 cm and with a JASCO P-1030 polarimeter.

The number-average molecular weight (Mn) and weight-average molecular weight (Mw) of the polymer were determined from size exclusion chromatography (SEC). SEC was performed with a JASCO PU-2080 liquid chromatograph provided with an ultraviolet-visible detector (JASCO UV-2070) and a CD detector (JASCO CD-2095). Two Tosoh TSKgel Multipore $H_{XL}$-M SEC columns (30 cm, manufactured by TOSOH CORPORATION) were used as columns, tetrahydrofuran (THF) containing 0.1 wt% of tetra-n-butylammonium bromide (TBAB) was used as an eluent, and a flow speed was set to 1.0 mL/min. A molecular weight calibration curve was obtained by using a polystyrene standard substance (manufactured by TOSOH CORPORATION).

SEC-MALS measurement was performed with an HLC-8220 GPC system (manufactured by TOSOH CORPORATION) provided with a differential refractometer connected to a DAWN-EOS MALS apparatus provided with semiconductor laser (1=690 nm) (manufactured by Wyatt Technology), the system being operated at 25°C, and with two TSKgel Multipore $H_{XL}$-M columns (manufactured by TOSOH CORPORATION) connected in series.

A scattered light intensity was measured with 18 light scattering detectors at different angles.

The intrinsic refractive index increment dn/dc of the polymer concerning a moving phase at 25°C was measured with an Optical rEX interferometric refractometer (manufactured by Wyatt Technology).

Thermogravimetry was performed with an EXSTAR6000 TG/DTA6200 manufactured by Seiko Instruments Inc. at a rate of temperature increase of 10°C/min and a nitrogen flow speed of 200 mL/min.

The actual value of mass spectrometry is a value measured in the analysis center of the School of Agricultural Sciences of the National University Corporation Nagoya University.

As described in the paragraphs 0043 and 0044 of Patent Literature 2, nitrobenzoic acid and L-alanine decyl ester were caused to react with each other so that amidation was performed, a nitro group of the resultant amide body was reduced to an amino group in accordance with an ordinary method, the reduced product was further caused to react with formic acid so as to be N-formylated, and the resultant was further subjected to a reaction in the presence of triphosgene. The resultant product was used as L-1.

In addition, a product produced in accordance with the method of Onitsuka, et al. (K. Onitsuka, K. Yanai, F. Takei, T. Joh, S. Takahashi, Organometallics1994, 13, 3862-3867. K. Onitsuka, T. Joh, S. Takahashi, Bull. Chem. Soc. Jpn. 1992, 65, 1179-1181.) as described in the paragraph 0066 of Patent Literature 2 was used as a platinum-palladium-μ-ethynediyl complex.

(Synthesis of comonomer 2)

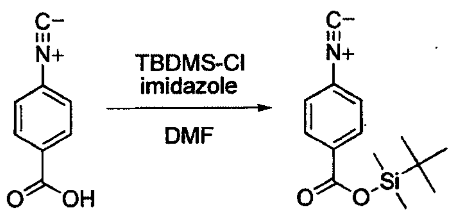


comonomer 2

4-Isocyanobenzoic acid (200mg, 1.36mmol) was dissolved in 2.8 mL of dimethylformamide (DMF), and then imidazole (102 mg, 1.50 mmol) was added to the solution. A 0.75-mol/L solution of tert-butyldimethylchlorosilane in DMF (2.0 mL, 1.50 mmol) was dropped to the mixture, and then the whole was stirred for 22 hours. Water was added to terminate the reaction, and then the reaction product was extracted with diethyl ether/water. The organic layer was collected and dehydrated with sodium sulfate. After that, the solvent was removed by distillation under reduced pressure. The resultant coarse product was purified by silica gel chromatography (eluent: $CHCl_3$/MeOH=9/1 (v/v)), and then the solvent was removed by distillation under reduced pressure. The remainder was dried with a vacuum pump overnight. Thus, a comonomer 2 (98 mg, yield: 28%) was obtained. The physical properties of the resultant comonomer 2 are shown below.

MP: 101.8 to 102.2°C;
IR: (KBr, $cm^{-1}$) : 2122 (νC=N), 1693 (νC=O) ;

$^1$H NMR ($CDCl_3$, rt, 500 MHz): δ0.38 (s, $CH_3$, 6H), δ1.02 (s, $CH_3$, 9H), 57.44 (d, J=8.5 Hz, aromatic, 2H), δ8.06 (d, J=8.5 Hz, aromatic, 2H);

Elemental analysis

Theoretical value ($C_{14}H_{19}NO_2Si$) : C 64.33; H 7.33; N 5.36;
Actual value: C 64.45; H 7.38; N 5.29;

(Synthesis of polymer having helical structure)

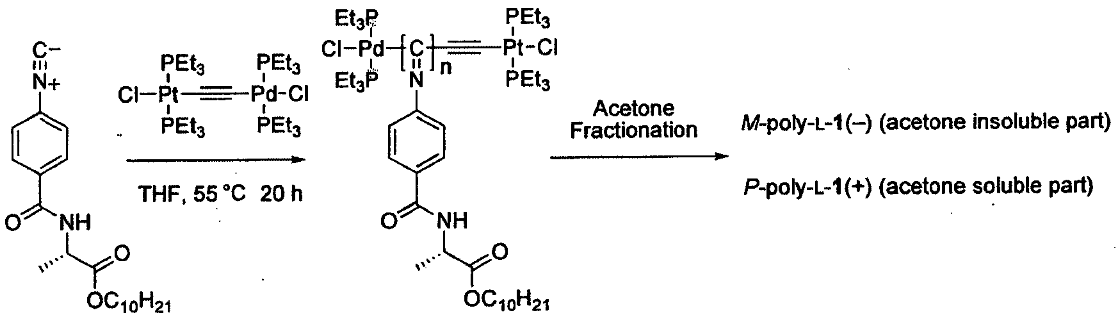


L-1 poly-L-1

L-1 (2.00 g, 5.60 mmol) was loaded into a polymerization tube, and then nitrogen replacement was performed three times. L-1 was dissolved in 22.5 mL of distilled tetrahydrofuran (THF), and then a 0.010-mol/L solution of the platinum-palladium-μ-ethynediyl complex in THF (5.5mL, 0.056mmol) was added to the resultant solution. The temperature of the resultant solution was increased from room temperature to 55°C, and then the solution was stirred for 20 hours. The temperature of the solution was returned to room temperature, and then the solvent was removed by distillation under reduced pressure by about a half. After that, the remainder was dropped to a large amount of methanol. The resultant precipitate was recovered by centrifugal separation and dried with a vacuum pump overnight. Thus, a living polymer poly-L-1 (1.86 g, yield: 93.0%) was obtained.

The resultant poly-L-1 was fractionated into a polymer (P-poly-L-1(+)) having a right-handed helical structure and a polymer (M-poly-L-1(-)) having a left-handed helical structure in accordance with the description of Onouchi H. et al. , J. Am. Chem. Soc. 2008, 130, 229-236. by means of a difference between the solubilities of the polymers in acetone by the following operations.

That is, the poly-L-1 (1.72 g, 4.80 mmol) was suspended in 500 mL of acetone, and then the suspension was stirred at room temperature for 2 hours. The suspension was fractionated into a soluble part and an insoluble part by centrifugal separation. The solvent of the soluble part was removed by distillation under reduced pressure, and then the remainder was dried with a vacuum pump overnight. Thus, the polyphenyl isocyanide derivative P-poly-L-1(+) having a right-handed helical structure (226 mg, yield: 13%) was obtained.

The insoluble part was dissolved in a small amount of chloroform, and then the solution was dropped to a large amount of acetone. The resultant precipitate was recovered by centrifugal separation and dried with a vacuum pump overnight. Thus, the polyphenyl isocyanide derivative M-poly-L-1 (-) having a left-handed helical structure (1.07 g, yield: 62%) was obtained.

The absolute molecular weight of P-poly-L-1 (+), M-poly-L-1 (-) was determined by size exclusion chromatography (TSKgel Multipore HXL-M, manufactured by TOSOH CORPORATION) with a light scattering detector (DAWN HELEOS, manufactured by Wyatt Technology). The results of P-poly-L-1(+) were Mn=$2.18 \times 10^4$ and Mw/Mn=1.20, and the results of M-poly-L-1(-) were Mn=$6.00 \times 10^4$ and Mw/Mn=1.06.

(Synthesis of copolymer having helical structure)

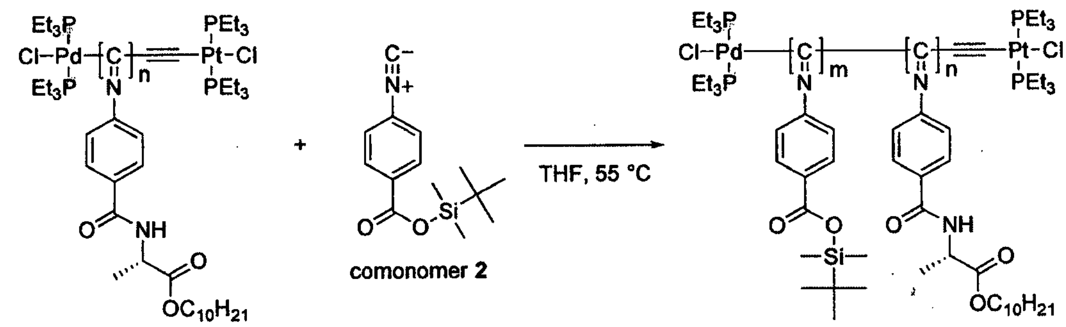


comonomer 2

*M*-poly-L-**1**(–) (acetone insoluble part)
*P*-poly-L-**1**(+) (acetone soluble part)

*M*-poly-L-**1**(–)-*b*-**2**
*P*-poly-L-**1**(+)-*b*-**2**

The M-poly-L-1 (-) (299 mg, 0.83 mmol) and the comonomer 2 (22 mg, 0.083 mmol) were loaded into a polymerization tube, and then nitrogen replacement was performed three times. Those compounds were dissolved in 8.4 mL of distilled tetrahydrofuran (THF). The temperature of the resultant solution was increased from room temperature to 55°C, and then the solution was stirred for 20 hours. The temperature of the solution was returned to room temperature, and then the solvent was removed by distillation under reduced pressure by about a half. After that, the remainder was dropped to a large amount of methanol. The resultant precipitate was recovered by centrifugal separation and dried with a vacuum pump overnight. Thus,ablockcopolymerM-poly-L-1(-)-b-2ofphenyl isocyanide (288 mg, yield: 90%) was obtained. The physical properties of the resultant M-poly-L-1(-)-b-2 are shown below. IR (film, $cm^{-1}$) : 3279 (νN-H), 1748 (νC=O ester), 1634 (amide I), 1537 (amide II); $^1H$ NMR (THF-$d_8$, 55°C, 500 MHz): δ0.20-0.80 (broad, $CH_3$, 0.6H), δ0. 89 (broad, $CH_3$, 3.9H), δ1.29 (broad, $CH_2$, 14H), δ1.55 (broad, $CH_3$ and $CH_2$, 5H), δ4.09 (broad, $CH_2$, 2H), δ4.30-4.80 (broad, CH, 1H), δ4.8-7.8 (broad, aromatic, 4.4H), δ8.0-9.0 (broad, NH, 1H);

Elemental analysis

Theoretical value $(C_{21}H_{30}N_2O_3)_{10}(C_{14}H_{19}NO_2Si)_1\cdot(H_2O)_{1,4}$: C 69.49; H8.38; N 7.60;
Actual value: C 69.51; H 8.28; N 7.60;

Similarly, the P-poly-L-1(+) (150 mg, 0.42 mmol) and the comonomer 2 (11 mg, 0.042 mmol) were loaded into a polymerization tube, and then nitrogen replacement was performed three times. Those compounds were dissolved in 4.2 mL of distilled tetrahydrofuran (THF). The temperature of the resultant solution was increased from room temperature to 55°C, and then the solution was stirred for 20 hours. The temperature of the solution was returned to room temperature, and then the solvent was removed by distillation under reduced pressure by about a half. After that, the remainder was dropped to a large amount of methanol. The resultant precipitate was recovered by centrifugal separation and dried with a vacuum pump overnight. Thus, a block copolymer P-poly-L-1 (+) -b-2 of phenyl isocyanide (140 mg, yield: 87%) was obtained. The physical properties of the resultant P-poly-L-1(+)-b-2 are shown below. IR ($film_2$, $cm^{-1}$) : 3262 (νN-H), 1749 (νC=O ester), 1634 (amide I), 1537 (amide II);
$^1H$ NMR ($CDCl_3$, 55°C, 500 MHz): δ0.20-0.80 (broad, $CH_3$, 0.6H), δ0.91 (broad, $CH_3$, 3.9H), δ1.31 (broad, $CH_2$, 14H), δ1.62 (broad, $CH_3$ and $CH_2$, 5H), δ4.11 (broad, $CH_2$, 2H), δ4.52 (broad, CH, 1H), δ4.8-7.8 (broad, aromatic, 4.4H), 58.3-9.2 (broad, NH, 1H);

Elemental analysis

Theoretical value $(C_{21}H_{30}N_2O_3)_{10}(C_{14}H_{19}NO_2Si)_1(H_2O)_{3.8}$: C 68.73; H 8.41; N 7.51;
Actual value: C 68.25; H 7.97; N 7.44;

(Deprotection of copolymer having helical structure)

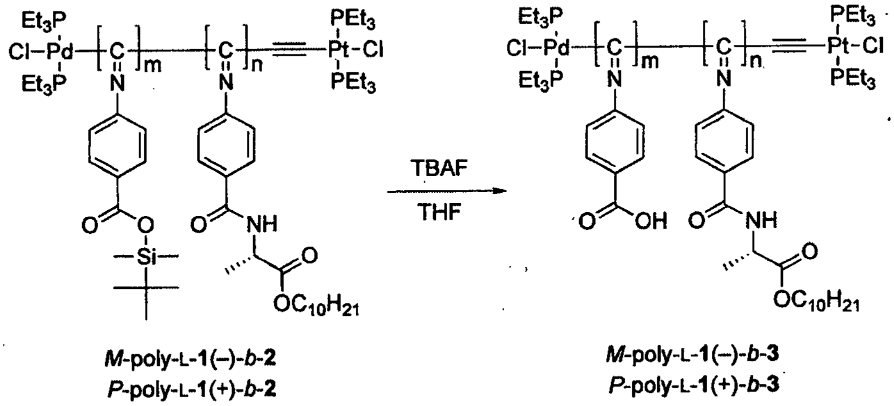


*M*-poly-L-1(−)-*b*-2
*P*-poly-L-1(+)-*b*-2

*M*-poly-L-1(−)-*b*-3
*P*-poly-L-1(+)-*b*-3

The M-poly-L-1(-)-b-2 (251.7 mg, 0.72 mmol) was dissolved in dry THF (25 mL). Tetrabutylammonium fluoride (TBAF, 1-mol/L THF solution) (410 μL, 0.41 mmol) was added to the solution, and then the mixture was stirred at room temperature. After a lapse of 3 hours, the reaction solution was dropped to an excessive mixed solution of methanol and 1NHCl (5/1, v/v). The resultant precipitate was recovered by centrifugal separation and dried with a vacuum pump. Thus, an M-poly-L-1(-)-b-3 in which a tert-butyldimethylsilyl group of the M-poly-L-1(-)-b-2 was substituted with hydrogen (216.0 mg, yield: 88%) was obtained.

Similarly, the P-poly-L-1(+)-b-2 (95.1 mg, 0.27 mmol) was dissolved in dry THF (4 mL). Tetrabutylammonium fluoride (TBAF, 1-mol/L THF solution) (160 μL, 0.16 mmol) was added to the solution, and then the mixture was stirred at room temperature. After a lapse of 3 hours, the reaction solution was dropped to an excessive mixed solution of methanol and 1NHCl (5/1, v/v). The resultant precipitate was recovered by centrifugal separation and dried with a vacuum pump. Thus, a P-poly-L-1 (+) -b-3 in which a tert-butyldimethylsilyl group of the P-poly-L-1 (+) -b-2 was substituted with hydrogen (90. 6 mg, yield: 98%) was obtained.

(Production of separating agent for optical isomers)

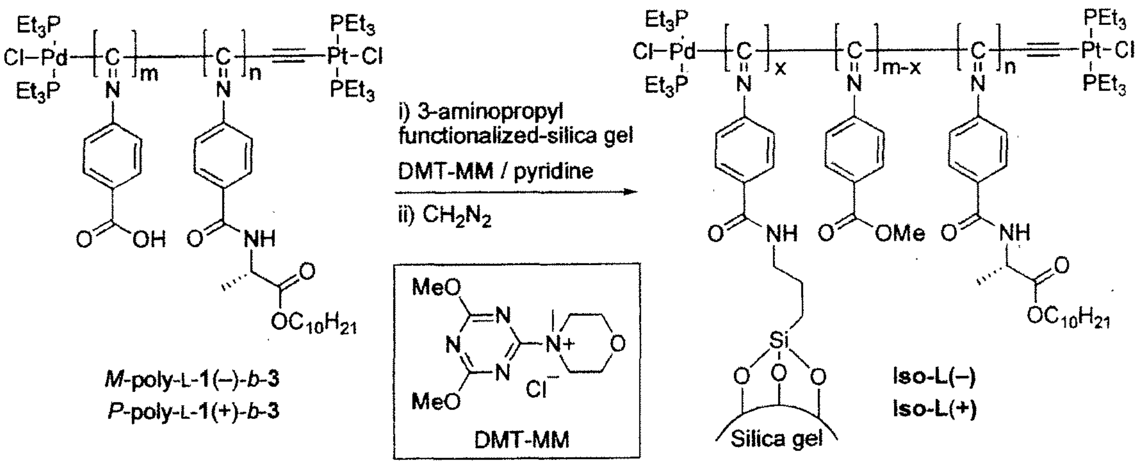


*M*-poly-L-1(−)-*b*-3
*P*-poly-L-1(+)-*b*-3

Iso-L(−)
Iso-L(+)

The M-poly-L-1 (-)-b-3 (210 mg), 4.5 mL of dry pyridine, and 57.6 mg of a condensing agent DMT-MM were added to 850 mg of silica gel (SP-1000-7-APSL, manufactured by DAISO CO., LTD., particle diameter: 7 μm, average pore diameter: 100 nm) subjected to an aminopropyltriethoxysilane treatment, and then the mixture was stirred at room temperature for 7 hours so that the fixation of the polyphenyl isocyanide derivative on the silica gel was performed. The resultant filler was recovered with a membrane filter, and was then sequentially washed with pyridine, THF, and methanol. After that, the washed product was dried in a vacuum and dispersed in a solution of diazomethane in diethyl ether for 1 hour so that the methyl esterification of an unreacted carboxylic acid moiety was performed. After that, the resultant filler was dispersed in chloroform, taken by filtration with a membrane filter, and sequentially washed with chloroform, THF, and methanol. After that, the washed product was dried in a vacuum. Thus, a filler Iso-L(-) in which the polyphenyl isocyanide derivative having a left-handed helical structure was fixed on the silica gel (927.2 mg) was obtained. A degree of chemical bonding (immobilization) of the polyphenyl isocyanide derivative in the resultant filler calculated from the

thermogravimetry of the filler was 9.9 wt%.

Similarly, the P-poly-L-1(+)-b-3 (80.7 mg), 4.5 mL of dry pyridine, and 37.3 mg of a condensing agent DMT-MM were added to 429 mg of silica gel (SP-1000-7-APSL, manufactured by DAISO CO., LTD., particle diameter: 7 μm, average pore diameter: 100 nm) subjected to an aminopropyltriethoxysilane treatment, and then the mixture was stirred at room temperature for 7 hours so that the fixation of the polyphenyl isocyanide derivative on the silica gel was performed. The resultant filler was recovered with a membrane filter, and was then sequentially washed with pyridine, THF, and methanol. After that, the washed product was dried in a vacuum and dispersed in a solution of diazomethane in diethyl ether for 1 hour so that the methyl esterification of an unreacted carboxylic acid moiety was performed. After that, the resultant f iller was dispersed in chloroform, taken by filtration with a membrane filter, and sequentially washed with chloroform, THF, and methanol. Afterthat, the washed product was dried in a vacuum. Thus, a filler Iso-L(+) in which the polyphenyl isocyanide derivative having a right-handed helical structure was fixed on the silica gel (460.6mg) was obtained. A degree of chemical bonding (immobilization) of the polyphenyl isocyanide derivative in the resultant filler calculated from the thermogravimetry of the filler was 4.7 wt%.

(Production of optical resolution column)

The filler Iso-L(-) was filled into a stainless column measuring 25 cm by 0.20 cm (i.d.) under pressure by a slurry filling method. Thus, a column L(-) was produced. Similarly, the filler Iso-L (+) was filled into a stainless column measuring 25 cm by 0.20 cm (i.d.) under pressure by a slurry filling method. Thus, a column L(+) was produced.

(Evaluation)

The evaluations of asymmetric distinction powers (a capacity factor $k_1'$, a separation factor α, and a resolution factor Rs) for the following compounds were performed with those columns by a liquid chromatography method. Tables 1 and 2 show the results of the optical resolution of racemic compounds 1 to 18 by HPLC involving using the column L (-), Table 3 shows the results of the optical resolution of the racemic compounds 1 to 18 by HPLC involving using the column L(+), and Table 4 shows the results of the optical resolution of the racemic compounds 10 to 14 by HPLC involving using the column L(-) and the column L(+), respectively.

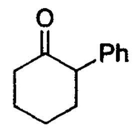
rac-**1**

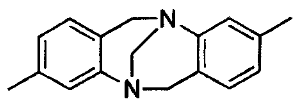
rac-**2**

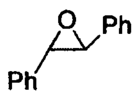
rac-**3**

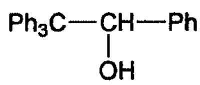
rac-**4**

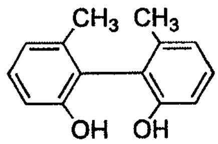
rac-**5**

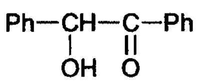
rac-**6**

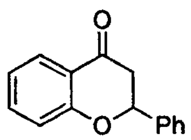
rac-**7**

$Co(acac)_3$
rac-**8**

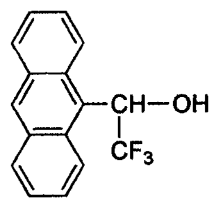
rac-**9**

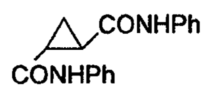
rac-**10**

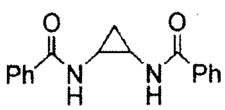
rac-**11**

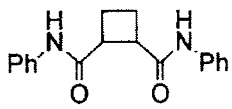
rac-**12**

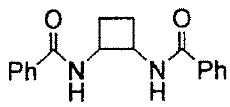
rac-**13**

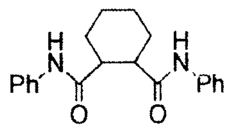
rac-**14**

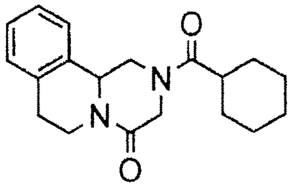

Cr(acac)$_3$ Fe(acac)$_3$ Ru(acac)$_3$

rac-15 rac-16 rac-17 rac-18

[Table 1]

Table 1

| Racemic compound | Eluent | | | | | | | | |
|---|---|---|---|---|---|---|---|---|---|
| | Hex/IPA (90/10) | | | Hex/IPA (98/2) | | | Hex/$CHCl_3$ (80/20) | | |
| | $k_1$' | α | Rs | $k_1$' | α | Rs | $k_1$' | α | Rs |
| rac-1 | 0.25 | ca.1 (-) | - | 0.37 | ca.1 (-) | - | 0.09 | ca.1 | - |
| rac-2 | 0.13 | ca.1 (-) | - | 0.17 | ca.1 (-) | - | 0.05 | ca.1 | - |
| rac-3 | 0.15 | 1.63 (+) | 1.08 | 0.19 | 1.70(+) | 1.44 | 0.08 | ca.1 | - |
| rac-4 | 0.28 | ca.1 | - | 0.61 | ca.1 | - | 0.12 | ca.1 | - |
| rac-5 | 1.39 | ca.1 | - | - | - | - | - | - | - |
| rac-6 | 0.47 | ca.1 (-) | - | 0.98 | 1.10 (-) | 0.63 | 0.20 | ca.1 | - |
| rac-7 | 0.03 | ca.1 | - | 0.39 | ca.1 | - | 0.09 | ca.1 | - |
| rac-8 | 0.06 | ca.1 | - | 0.18 | ca.1 | - | 0.02 | ca.1 | - |
| rac-9 | 1.02 | ca.1 | - | 5.42 | ca.1 | - | 2.22 | ca.1 | - |
| rac-10 | 0.23 | 1.43 (+) | 0.80 | 2.38 | 1.46(+) | 2.52 | - | - | - |
| rac-15 | - | - | - | 2.19 | ca.1 (-) | - | - | - | - |

[Table 2]

Table 2

| Racemic compound | Eluent | | | | | | | | |
|---|---|---|---|---|---|---|---|---|---|
| | Hex/$CHCl_3$ (95/5) | | | Hex/THF (90/10) | | | Hex/THF (98/2) | | |
| | $k_1$' | α | Rs | $k_1$' | α | Rs | $k_1$' | α | Rs |
| rac-1 | 0.33 | ca.1 | - | 0.28 | ca.1 | - | 0.70 | 1.71 (-) | 0.29 |
| rac-2 | 0.14 | ca.1 | - | 0.15 | ca.1 | - | 0.41 | ca.1 | - |
| rac-3 | 0.15 | 1.79 (+) | 0.72 | 0.15 | 1.68(+) | 1.02 | 0.34 | 1.67 (+) | 1.71 |
| rac-4 | 0.71 | ca.1 | - | 0.30 | ca.1 | - | 2.23 | ca.1 | - |
| rac-5 | 5.78 | ca.1 | - | 8.91 | ca.1 | - | - | - | - |
| rac-6 | 1.24 | 1.05(-) | 0.27 | 0.60 | ca.1 | - | 1.65 | 1.10(-) | 0.74 |
| rac-7 | 0.37 | ca.1 | - | 0.27 | ca.1 | - | 0.57 | ca.1 | - |
| rac-8 | 0.09 | ca.1 | - | 0.16 | ca.1 | - | 2.43 | ca.1 (-) | - |
| rac-9 | - | - | - | 1.14 | ca.1 | - | - | - | - |
| rac-10 | - | - | - | 2.37 | 1.32 | 1.52 | - | - | - |
| rac-16 | - | - | - | - | - | - | 1.54 | ca.1 (+) | - |

(continued)

| Racemic compound | Eluent | | | | | | | | |
|---|---|---|---|---|---|---|---|---|---|
| | Hex/$CHCl_3$ (95/5) | | | Hex/THF (90/10) | | | Hex/THF (98/2) | | |
| | $k_1$' | α | Rs | $k_1$' | α | Rs | $k_1$' | α | Rs |
| rac-17 | - | - | - | - | - | - | 2.41 | ca.1 (+) | - |
| rac-18 | - | - | - | - | - | - | 0.70 | ca.1 (+) | - |

[Table 3]

Table 3

| Racemic compound | Eluent | | | | | | | | | | | |
|---|---|---|---|---|---|---|---|---|---|---|---|---|
| | Hex/IPA (90/10) | | | Hex/IPA (98/2) | | | Hex/$CHCl_3$ (95/5) | | | Hex/THF (98/2) | | |
| | $k_1$' | α | Rs | $k_1$' | α | Rs | $k_1$' | α | Rs | $k_1$' | α | Rs |
| rac-1 | 0.11 | ca.1 (+) | - | 0.16 | ca.1 (+) | - | 0.12 | ca.1 (+) | - | 0.43 | ca.1 (+) | - |
| rac-2 | 0.05 | ca.1 (-) | - | 0.05 | ca.1 (-) | - | 0.06 | ca.1 (+) | - | 0.37 | ca.1 (-) | - |
| rac-3 | 0.08 | ca.1 (-) | - | 0.02 | ca.1 (-) | - | 0.03 | ca.1 (-) | - | 0.35 | ca.1 (-) | - |
| rac-4 | 0.14 | 1.00 | - | 0.25 | ca.1 | - | 0.23 | ca.1 (+) | - | 1.06 | 1.00 | - |
| rac-5 | 0.81 | 1.00 | - | - | - | - | - | - | - | - | - | - |
| rac-6 | 0.26 | ca.1 (+) | - | 0.35 | ca.1 (+) | - | 0.36 | ca.1 | - | 1.49 | ca.1 (+) | - |
| rac-7 | 0.12 | 1.00 | - | 0.04 | 1.00 | - | 0.14 | ca.1 | - | 0.48 | ca.1 | - |
| rac-8 | 0.09 | 1.00 | - | 0.06 | 1.00 | - | 0.10 | ca.1 | - | 1.66 | 1.22(+) | 0.47 |
| rac-9 | 0.61 | 1.00 | - | 3.04 | 1.00 | - | - | - | - | - | - | - |
| rac-10 | 0.25 | ca.1 (-) | - | 1.95 | 1.08 (-) | 0.29 | - | - | - | - | - | - |
| rac-15 | - | - | - | 1.65 | 1.13(+) | 0.35 | - | - | - | - | - | - |
| rac-16 | - | - | - | - | - | - | - | - | - | 1.03 | 1.20 (-) | 0.46 |
| rac-17 | - | - | - | - | - | - | - | - | - | 1.81 | 1.16(-) | 0.39 |
| rac-18 | - | - | - | - | - | - | - | - | - | 0.36 | ca.1 (+) | - |

[Table 4]

Table 4

| Racemic compound | Polymer | | | | | |
|---|---|---|---|---|---|---|
| | Iso-L(-) | | | Iso-L(+) | | |
| | $k_1$' | α | Rs | $k_1$' | α | Rs |
| rac-10 | 2.38 | 1.46 (+) | 2.52 | 1.95 | 1.08 (-) | 0.29 |
| rac-11 | 1.89 | ca.1 | - | 1.68 | ca.1 | - |
| rac-12 | 2.02 | 1.53 (+) | 1.82 | 1.54 | 1.10 (+) | 0.33 |
| rac-13 | 1.25 | 1.13 (-) | 0.48 | 1.10 | 1.25 (-) | 0.85 |
| rac-14 | 0.67 | 1.31 (+) | 0.50 | 0.42 | 1.80 (+) | 0.92 |

In the optical resolution of Tables 1 to 3 out of the optical resolution of Tables 1 to 4, liquid chromatography was performed with a mixed solvent shown in any one of Tables 1 to 3 as a moving phase at a flow speed of 0.1mL/min, a detection wavelength of 254 nm, and a temperature of 25°C. In the optical resolution of Table 4, a mixed solvent of

n-hexane and 2-propanol (IPA) (n-hexane/IPS=98/2 (volume ratio)) was used as a moving phase. It should be noted that in the tables, the term "Hex" represents n-hexane, the term "IPA" represents 2-propanol (isopropyl alcohol), the term "$CHCl_3$" represents chloroform, and the term "THF" represents tetrahydrofuran, and the ratio of an eluent in each table is a volume ratio.

In addition, the number of theoretical plates of each column was determined with benzene. As a result, the number of theoretical plates of the column L (-) was about 2, 600 and the number of theoretical plates of the column L(+) was about 2,000. The evaluation of a retention time was performed by using the elution time ($t_0$) of 1,3,5-tri-tert-butylbenzene. The identification of a detected optical isomer was performed with a UV/Vis multiple wavelength detector (MD-2010 Plus, JASCO Corporation, 254 nm) and an optical rotation detector (OR-2090 Plus, JASCO Corporation), provided that a circular dichroism detector (CD-2095, JASCO Corporation, 254 nm) was used instead of the optical rotation detector in the analysis of any one of the metal complexes like the rac-8 and 16 to 18.

In the tables, the capacity factor $k_1'$ was determined from the following equation (1). The separation factor $\alpha$ is a ratio of a $k_2'$ to the $k_1'$. The resolution factor Rs was determined from the following equation (2).

$$\text{Capacity factor } (k_n') = (t_n - t_0)/t_0 \qquad (1)$$

(In the equation, $t_n$ represents the retention time of an optical isomer to be detected n-th.)

$$\text{Resolution factor (Rs)} = 2 \times L/W \qquad (2)$$

(In the equation, L represents a distance between both peaks of an optical isomer and W represents the sum of the bandwidths of both the peaks.)

The Iso-L(-) was evaluated for its optical resolving power with various eluents shown in the above-mentioned tables. As a result, the Iso-L(-) succeeded in optically resolving 7 kinds (rac-1, 3, 6, 10, and 12 to 14) out of the 18 kinds of racemic bodies rac-1 to rac-18. The Iso-L (+) succeeded in optically resolving 8 kinds (rac-8, 10, and 12 to 17) out of the rac-1 to the rac-18. In addition, when the optical resolving powers of the Iso-L(-) and the Iso-L(+) were compared with each other under the condition "hexane/2-propanol=98/2," the reversal of an elution order was observed with regard to the optical resolution of the rac-3, 6, 10, and 15. In addition, when the optical resolution of the rac-11 to 14 was performed under the same condition, the Iso-L (+) showed the higher optical resolving power with regard to the resolution of the rac-13 and 14.

The Iso-L (-) and the Iso-L (+) are identical to each other in the chirality of a side chain and are different from each other in the helical sense of the helix of a polymer main chain. On the other hand, in any such filler using a helical polymer, the helical sense of the helical polymer affects an optical resolving power. For example, when fillers different from each other only in the helical sense of the helix of a polymer are used, it is estimated that all elution orders of racemic bodies are reversed. In addition, paying attention only to the Iso-L(-) reveals that the expression of the optical resolving power of the helical polymer is affected by an eluent as well. In the optical resolution of the rac-1 to therac-18, the racemic bodies which the Iso-L (-) was able to optically resolve and the racemic bodies which the Iso-L (+) was able to optically resolve were different from each other except for the rac-10 and 12 to 14. This is probably because of, for example, the helical sense of the helix of a polymer, a combination of three products, i.e., the polymer, a racemic body, and an eluent, and the fact that the Iso-L(+) had too small a molecular weight (helical structure) to optically resolve the other racemic bodies except the 8 kinds of racemic bodies which the Iso-L(+) was able to optically resolve under the foregoing condition.

In addition, as described in the foregoing, in the experiment of the evaluation for an optical resolving power, both of such a result that the elution order was reversed between the Iso-L (-) and the Iso-L(+) (rac-10), and such a result that the elution order was not reversed therebetween (rac-12, 13, and 14) were obtained. If the helical sense of the helix of a polymer alone contributes to optical resolution, it is estimated that the Iso-L(-) and the Iso-L (+) are reverse to each other in elution order. If the chirality of a side chain alone contributes to the optical resolution, it is estimated that the Iso-L (-) and the Iso-L(+) show the same resolving power and the same elution order. In actuality, however, both the same elution order and the reversed elution order were observed. Accordingly, it is estimated that both the chirality of a side chain and the helical structure of the helical polymer contribute to the optical resolving power of the polymer.

Industrial Applicability

The separating agent for optical isomers of the present invention is excellent in solvent resistance. Accordingly, a solvent having high polarity such as THF can be used as a moving phase in optical resolution. In addition, to enable

the separation of a target product in the optical resolution, to improve separation efficiency, or to reverse an elution order is expected from a combination of factors such as the length of the helical structure in the helical polymer, the kind of optically active moiety, and the helical sense of the helical polymer. Therefore, the discovery and improvement of new conditions under which optical isomers are separated are expected from an investigation on new composition of the moving phase, an investigation on a combination of optically active moiety in the helical polymer, and investigations on the helical sense and length of the helical structure.

## Claims

1. A separating agent for optical isomers, which is formed of a helical polymer having a structure represented by the following formula (2) and a carrier

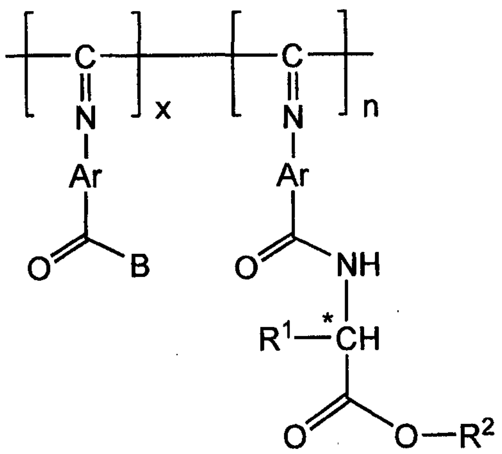

(2)

wherein in the formula (2), Ar's each independently represent an aromatic group or a heteroaromatic group, $R^1$'s each independently represent an organic group having 1 to 10 carbon atoms which may have a heteroatom and may contain an aromatic ring, $R^2$'s each independently represent a hydrocarbon group having 1 to 20 carbon atoms, and n represents an integer of 10 or more, B's each independently represent a group bonded to the surface of the carrier and x represents an integer of 1 to 5, and wherein the carrier is a surface-treated silica.

2. The separating agent for optical isomers according to claim 1, wherein the helical polymer is left-handed.

3. The separating agent for optical isomers according to claim 1 or 2, wherein the amino acid residue in the formula (2) is a residue of a D-type amino acid.

4. The separating agent for optical isomers according to claim 1 or 2, wherein the amino acid residue in the formula (2) is a residue of an L-type amino acid.

5. The separating agent for optical isomers according to any one of claims 1 to 4, wherein the amino acid residue in the formula (2) is a residue of a single type of amino acid.

6. The separating agent for optical isomers according to claim 5, wherein the amino acid residue in the formula (2) is a residue of L-alanine.

7. The separating agent for optical isomers according to any one of claims 1 to 6, wherein the Ar's each represent a phenylene group.

8. The separating agent for optical isomers according to any one of claims 1 to 7, wherein the $R^2$'s each represent a linear alkyl group having 1 to 20 carbon atoms.

9. The separating agent for optical isomers according to claim 8, wherein the $R^2$'s each represent an n-decyl group.

**Patentansprüche**

1. Trennmittel für optische Isomere, welches aus einem helikalen Polymer mit einer Struktur, die durch die folgende Formel (2) wiedergegeben ist, und einem Träger gebildet ist

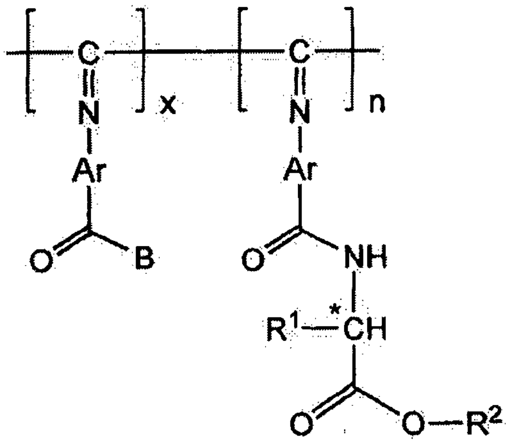

(2)

wobei in der Formel (2) die Reste Ar jeweils unabhängig eine aromatische Gruppe oder eine heteroaromatische Gruppe bedeuten, die Reste $R^1$ jeweils unabhängig eine organische Gruppe mit 1 bis 10 Kohlenstoffatomen bedeuten, welche ein Heteroatom aufweisen kann und einen aromatischen Ring enthalten kann, die Reste $R^2$ jeweils unabhängig eine Kohlenwasserstoffgruppe mit 1 bis 20 Kohlenstoffatomen bedeuten, und n eine ganze Zahl von 10 oder mehr bedeutet, die Reste B jeweils unabhängig eine an die Oberfläche des Trägers gebundene Gruppe bedeuten und x eine ganze Zahl von 1 bis 5 bedeutet, und wobei der Träger ein oberflächenbehandeltes Siliciumdioxid ist.

2. Trennmittel für optische Isomere gemäß Anspruch 1, wobei das helikale Polymer linksgängig ist.

3. Trennmittel für optische Isomere gemäß Anspruch 1 oder 2, wobei der Aminosäurerest in der Formel (2) ein Rest einer D-Aminosäure ist.

4. Trennmittel für optische Isomere gemäß Anspruch 1 oder 2, wobei der Aminosäurerest in der Formel (2) ein Rest einer L-Aminosäure ist.

5. Trennmittel für optische Isomere gemäß einem der Ansprüche 1 bis 4, wobei der Aminosäurerest in der Formel (2) ein Rest einer einzigen Art von Aminosäure ist.

6. Trennmittel für optische Isomere gemäß Anspruch 5, wobei der Aminosäurerest in der Formel (2) ein L-Alaninrest ist.

7. Trennmittel für optische Isomere gemäß einem der Ansprüche 1 bis 6, wobei die Reste Ar jeweils eine Phenylengruppe bedeuten.

8. Trennmittel für optische Isomere gemäß einem der Ansprüche 1 bis 7, wobei die Reste $R^2$ jeweils eine lineare Alkylgruppe mit 1 bis 20 Kohlenstoffatomen bedeuten.

9. Trennmittel für optische Isomere gemäß Anspruch 8, wobei die Reste $R^2$ jeweils eine n-Decylgruppe bedeuten.

**Revendications**

1. Agent de séparation pour la séparation d’isomères optiques, constitué d’un polymère hélicoïdal dont la structure est représentée par la formule (2) qui suit et un porteur,

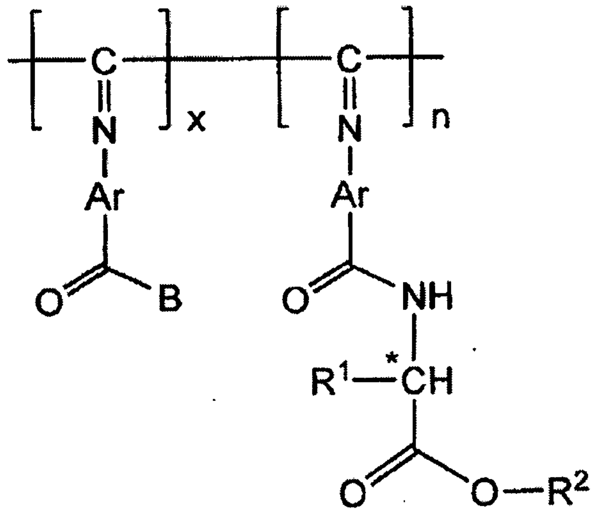

(2)

dans lequel, dans la formule (2), les Ar représentent chacun indépendamment un groupe aromatique ou un groupe hétéroaromatique, les $R^1$ représentent chacun indépendamment un groupe organique comportant de 1 à 10 atomes de carbone qui peut compter un hétéroatome et comprendre un anneau aromatique, les $R^2$ représentent chacun indépendamment une groupe hydrocarbure comportant de 1 à 20 atomes de carbone, et n représente un entier supérieur ou égal à 10, les B représentent chacun indépendamment un groupe lié à la surface du porteur, et x représente un entier de 1 à 5, et dans lequel le porteur est une silice à traitement de surface.

2. Agent de séparation pour la séparation d'isomères optiques selon la revendication 1, dans lequel le polymère hélicoïdal est lévogyre.

3. Agent de séparation pour la séparation d'isomères optiques selon la revendication 1 ou 2, dans lequel le résidu acide aminé dans la formule (2) est un résidu acide aminé de type D.

4. Agent de séparation pour la séparation d'isomères optiques selon la revendication 1 ou 2, dans lequel le résidu acide aminé dans la formule (2) est un résidu acide aminé de type L.

5. Agent de séparation pour la séparation d'isomères optiques selon l'une quelconque des revendications 1 à 4, dans lequel le résidu acide aminé dans la formule (2) est un résidu acide aminé de type unique.

6. Agent de séparation pour la séparation d'isomères optiques selon la revendication 5, dans lequel le résidu acide aminé dans la formule (2) est un résidu L-alanine.

7. Agent de séparation pour la séparation d'isomères optiques selon l'une quelconque des revendications 1 à 6, dans lequel les Ar représentent chacun un groupe phénylène.

8. Agent de séparation pour la séparation d'isomères optiques selon l'une quelconque des revendications 1 à 7, dans lequel les $R^2$ représentent chacun un groupe alkyle linéaire comportant de 1 à 20 atomes de carbone.

9. Agent de séparation pour la séparation d'isomères optiques selon la revendication 8, dans lequel les $R^2$ représentent chacun un groupe n-décyle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02030853 A1
- WO 07063994 A1


### Non-patent literature cited in the description


- *J. Am. Chem. Soc.,* 2009, vol. 131, 6709
- KUROMATO-YO JUSHI. KYORITSU SHUPPAN, JP, 1989, 78-83
- **K. ONITSUKA ; K. YANAI ; F. TAKEI ; T. JOH ; S. TAKAHASHI.** *Organometallics,* 1994, vol. 13, 3862-3867
- **K. ONITSUKA ; T. JOH ; S. TAKAHASHI.** *Bull. Chem. Soc. Jpn.,* 1992, vol. 65, 1179-1181
- **ONOUCHI H. et al.** *J. Am. Chem. Soc.,* 2008, vol. 130, 229-236